# EUROPEAN PATENT SPECIFICATION

(11) **EP 3 630 705 B1**
(45) Date of publication and mention of the grant of the patent: **06.12.2023**
(21) Application number: 18711676.9
(22) Date of filing: 31.01.2018
(51) Int. Cl.: C05F 3/00, C05F 17/00, C05F 7/00, C02F 1/22, C02F 1/24, C02F 1/44, C02F 11/14

(54) **A METHOD FOR CONVERSION OF POULTRY MANURE**
VERFAHREN ZUR UMWANDLUNG VON HÜHNERMIST
PROCÉDÉ DE CONVERSION DE FUMIER DE VOLAILLE

(30) Priority: 22.05.2017 UZ 1700194
(43) Date of publication of application: 08.04.2020
(73) Proprietor: Mkrtchyan, Ovik Leonardovich, Tashkent 100187 (UZ); Mhitarjans, Mhitars, 1024 Riga (LV)
(72) Inventor: Mkrtchyan, Ovik Leonardovich, Tashkent 100187 (UZ); Mhitarjans, Mhitars, 1024 Riga (LV)
(74) Representative: KATZAROV S.A.
(86) International application number: PCT/IB2018/000096
(87) International publication number: WO 2018/215826

(56) References cited:
- WO-A1-2012/096574
- DE-A1- 10 101 626
- NL-A- 2 012 282
- NL-C- 2 012 282
- US-A1- 2003 042 209

## Description

The invention relates to the field of agriculture, more particularly to the field of poultry farming wastes in order to produce organic fertilizers and biogas, and it may be useful at both bioenergetic plants of poultry farms and bioenergetic plants for agricultural and food industry waste conversion.

At present, there is a serious problem of removal, processing, sustainable utilization of poultry farming wastes and live farming wastes. Environmental factors such as air pollution, bad smells, spread of diseases appear to be problematic as well.

Energy balance of any biogas unit involves initial raw material, on the one hand, and production wastes (waste substrate and biogas) on the other hand. In line of existing practice, waste substrate is used as a fertilizer in agriculture. For continuous manner of biogas technology it is necessary to either process a full amount of waste substrate or retain it inside a custom-built storage tank which may be quite a sizeable facility (tens of thousands of cubic meters in volume). Currently, in line with global practice, most storage tanks used to retain farming waste substrates have a capacity designed to comply with seasonal limitations on delivery of waste substrates (to be used as a fertilizer) to the fields (farm lands). It is required to have a collecting tank for this particular period. In case of industrial biogas system designed for processing of 100 tons per day, a capacity of tank may amount to 14,500 tons. Collecting tanks are fully emptied due to intensive vehicular transportation flow on a twice a year basis (in spring and fall).

The prior art knows a method for the production of granulated poultry manure, comprising the steps of fining the poultry manure, fermentation, granulating and drying thereof. After fermentation, fermented manure pulp is contacted with air oxygen to suppress methane digestion and exposed to thickening to isolate a filtrate. Manure granulation can be performed simultaneously with drying by means of fluid bed spraying and dust trapping in gases exhausting after granulation. Drying is performed by flue gases resulting from combustion of biogas extracted from fermentation products. A filtrate resulting from fermented manure pulp thickening is heated and used for heating and dilution of initial manure prior to fermentation (RU 2032644, C05F3/00).

The disadvantage of the method known from the prior art is low effectiveness of using the produced biogas, the fermentation product which is combusted for further use in drying. In addition, a filtrate returned to the process and used for dilution of initial manure prior to fermentation comprises nitrogen-containing substances that tend to accumulate in fermenters with a lapse of time, thus inhibiting the entire fermentation process. Also, such prior art technology suffers from a loss of chemicals useful for biofertilizers as such chemicals are carried away by a filtrate returned to the process.

The prior art also knows a method for the production of an organic fertilizer, comprising the steps of treating animal excrements with mineral acids and subsequently subjecting thereof to neutralization, wherein said animal excrements are mixed with water, treated with mineral acids to achieve a pH in a range of 0.1-2.0, held for 2-12 hours under normal temperature and pressure. Then, this stuff is subjected to decomposition for 24-60 hours. The liquid phase thus produced is separated from insoluble solids and a pH is adjusted to 5.0-6.2 by addition of the main substance and a sediment formed is separated upon completion of neutralization. As a type of excrements, poultry manure, preferably chicken manure, is used. The excrements of animal origin are mixed with water for 5 - 6 hours. Coarse foreign solids are separated from a mixture of excrements and water by means of mineral acids. Gases formed as a result of mixing excrements and water are evacuated by addition of air to the mixture. As the main substance, calcium oxide, calcium hydroxide and calcium carbonate are used. After addition of the main substance, a sediment is separated by centrifuging (RU 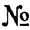 871733, C05F3/00).

The disadvantages of the known method are losses of generated biogas and also insufficient utilization of volatile substances in addition to the need of suppressing bad smells as hydrogen sulphide and hydrogen nitride formed during conversion of waste poultry manure are vented to atmosphere. Also, this particular technology requires use of concentrated sulphuric acid which may be hazardous to both personnel and environment.

The prior art also knows a method for conversion of organic wastes, which is realized using an organic waste conversion unit (RU 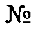 2040138, A01C 3/02). In this conversion unit known from the prior art, the manure is diluted with water and a liquid fraction of fermented manure. The manure diluted to the required consistency is then subjected to reaction comprising hydrolysis of plant polymers and acid generation to subsequently form acetic acid and hydrogen. Further, the pulp is supplied to Phase II fermentation reactor, wherein acetic acid and hydrogen produce methane and carbon dioxide gas as biogas components. During the entire fermentation cycle, biogas is removed from reactors of both fermentation phases and stored in a gas storage receiver prior to supplying to a fire chamber for combustion. Hot combustion gases arrive from the fire chamber to a drying unit, where they are used for drying a solid fraction of fermented manure, then they pass to a wet scrubber, where waste combustion gases are purified to separate solid phase particles, and residual heat of said waste combustion gases is utilized.

Simultaneously with loading, a portion of fermented manure in an amount equal to daily amount of diluted manure to be loaded is separated to form a solid fraction and liquid fraction. The manure liquid fraction is passed to a drying unit to remove an excess moisture. The dried solid fraction of the manure is transferred to storage facility. A portion of the liquid fraction produced during separation of the fermented manure is fed in an amount of 10-50% of water weight to the wet scrubber where, when contacted with combustion gases, the liquid fraction traps particles of dried solid phase, gets heated due to utilization of heat of waste combustion gases and gets mixed with fresh manure being loaded. Other portion of the liquid phase is fed to a heat exchanger so that its heat can be transferred to initial manure being loaded and it is collected afterwards in an collecting tank intended for collection and storage of the liquid fraction.

The disadvantages of the known method are low effectiveness of using the biogas which is combusted providing heat which is used only for drying the fermented manure, a need of providing facilities for liquid phase storage, whose capacity is designed to meet seasonal limitations for delivery of the liquid fraction (as a fertilizer) to farming lands, thus contributing more to costs of the entire conversion system, and also resulting in high operation costs since over 80% of the product delivered to farming lands is water. In addition, a filtrate returned to the process and used for dilution of initial manure prior to fermentation comprises nitrogen-containing substances that tend to accumulate in fermenters, thus resulting in inhibition of fermentation. Also, such prior art technology suffers from a loss of chemicals useful for biofertilizers as such chemicals are carried away by a filtrate returned to the process.

The prior art also knows a method for the production of bioproducts and biogas from liquid poultry manure (RU 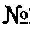 2576208, C05F3/00, C05F3/06), wherein initial manure is exposed sequentially to mesophilic anaerobic treatment within a temperature range of 32-37°C for over 24 hours, thermophilic anaerobic treatment within a temperature range of 52-57°C for over 6 days to produce biogas and effluent. The effluent is separated to form a liquid fraction with humidity of over 97% and a solid fraction with humidity of over 90% to produce solid and liquid fertilizers and additives comprising proteins and vitamins. The biogas is used to produce power. The liquid fraction is subjected to anaerobic biofiltration in a recirculation mode to produce extra amounts of biogas and achieve TBOD of no greater than 2000 mg/l for liquid fraction. The solid fraction is subjected to solid phase anaerobic treatment in psychrophilic or mesophilic mode to achieve a carbon to nitrogen ratio C:N<10 and produce extra amounts of biogas.

However, the known technology does not solve the problem of a full-fledged conversion of waste substrate since the liquid phase processed in such a manner is fit for long-lasting storage in collection vessels (for future agricultural engineering use) or for subsequent treatment in high-load aeration tanks (prior to discharge basin or during production of technical grade water), and it requires construction of storage tanks to be emptied to evacuate large amounts of water. This results in enhanced operational costs. In addition, when it comes to the treatment in high-load aeration tanks, there are losses of elements that constitute a prospective fertilizer. The disadvantage of the method known from the prior art is high TBOD of <2000 mg/l for the liquid fraction.

The prior art also knows a biogas complex (RU 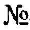 85293, A01C3/02*)*, wherein an initial product (cattle manure, swine manure and poultry manure) arrives to an auxiliary separator where separation (full or partial) of the solid fraction of said initial product occurs. Separated portion of the solid fraction is directed to a fermenter where composting occurs and a target product is produced. The remaining portion of the initial product (having humidity of 91.5%) is fined to produce particles no greater than 1 mm in size, then it is processed in a gas-liquid ejector to remove oxygen dissolved in water up to the required level based on initial amount and to sterilize the initial pulp. A collecting tank to receive a working mixture is used for collection of the prepared fine pulp and heating thereof up to required temperature (40-42°C). Further, a fully prepared product, which is heated to the required temperature, is supplied to a digester tank to ensure biodegradation of the product to obtain biogas and effluent (a biofertilizer). The biogas thus obtained is collected in a gas receiver and flows into a filter, wherein CH₄ and CO₂ are separated at a proportion required for effective operation of a cogeneration plant and also a sulphur component is separated and dehydration (defoaming) occurs. The enriched methane is supplied to the cogeneration plant for co-production of thermal and electrical power. After being subjected to biodegradation in the digester tank, the pulpous mass goes for separation to make a liquid fraction and a viscous fraction. The viscous fraction is directed to a drier wherein the cogeneration plant heat is used to maintain the required temperature.

The disadvantage of the method known from the prior art is having to construct facilities for liquid phase storage, whose capacity is designed to meet seasonal limitations for delivery of the liquid fraction (as a fertilizer) to farming lands, thus contributing more to costs of the entire conversion system, and also resulting in high operation costs.

The prior art knows a versatile biogas complex (RU 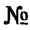 110588, A01C3/02, C02F11/04), wherein the poultry manure is mixed with water and a liquid fraction, both humidity and temperature are then adjusted to required values, afterwards a liquid mass of organic waste is directed to a hydrolysis reactor and subsequently to a digester tank. Such pieces of equipment operate under desired temperature, acid-alkaline balance and ensure that the liquid mass being fermented inside can be subjected to periodical agitation. Further, the liquid mass of organic waste (chicken manure) is pumped to the hydrolysis reactor operating at a higher humidity and adjustable pH. Then, a substrate is subjected to dosed supply from the hydrolysis reactor to the digester tank. The substrate is supplied from the digester tank to a separator, wherein the post-digestion residuals of fermentation are separated into a solid fraction and a liquid fraction that arrive afterwards to production shop. The solid fraction can be used as a soil revitalizer on farming lands owned by a producer or, alternatively, it can be dried, bagged and offered for sale. Biogas passes through a vent system, undergoes purification with moisture removal, and after pressure stabilization in a gas receiver the biogas is supplied to customers.

The disadvantages of the method known from the prior art are having to construct facilities for liquid phase storage, whose capacity is designed to meet seasonal limitations for delivery of the liquid fraction (as a fertilizer) to farming lands, having to use special transportation vehicles equipped with large capacity containers fit to contain a substantial volume of the liquid phase, thus contributing more to costs of the entire system, and also resulting in high operation costs since over 80% of the product delivered to farming lands is water. In addition, the liquid fraction includes nitrogen, whose concentration tends to increase when it comes to nitrogen recirculation in the digester tank, thus resulting in a full inhibition of the entire process, which leads in its turn to restart of the process that lasts for 2-4 months (a restart of the process includes a full emptying of the digester tank, loading it with a new raw material, heating, supply of the raw material to the digester tank by gradually increasing amounts).

The technically closest to the suggested method is the known method of producing an organic fertilizer (RU 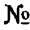 2504531, C05F3/00), comprising the step of fermentation of an initial product, removing a biogas and separating to obtain a separation product. The initial product includes poultry and cattle manure which is fermented prior to use in such method. Upon completion of fermentation and biogas removal, a solid component of the initial product is extracted from said fermentation product by separation. A liquid component of the initial product is mixed with a flocculating agent. A flocculation product is left for settling up to separation of solid and liquid fractions at a ratio ranging from 1:3 to 1:5. The liquid fraction is removed and a settled product is decanted to a humidity of 40-50%. The liquid fraction is removed and a decanted mass is mixed with the solid component of the separation product and squeezed by a screw squeezer. Alternatively, the step of squeezing in the screw squeezer is performed first and it is followed by the step of mixing with the solid component of the separation product which was squeezed earlier using the screw squeezer. Product humidity at the squeezer outlet is 20-30%. Afterwards, the product is subjected to thermal drying at a temperature of 40-60°C up to product humidity of 10-15%. The prior art method uses the flocculating agent named «Sibfloc» taken in an amount of 0.1-0.01% of the weight of the liquid component of the separation product. Alternatively, a flocculating agent comprising a mixture of starch and aluminum sulphate at a ratio of 1:1 in an amount of 0.5-2% of the weight of the liquid component of the separation product is used. Alternatively, a flocculating agent FILTERING SYSTEM in an amount of 0.01-0.05% of the weight of the liquid component of the separation product is used. Prior to thermal drying, the product is granulated.

The disadvantage of the prior art method is its being lack of environmental safety since the separated water is discharged to sewerage system, thus polluting the environment and leading to loss of mineral substances. Yet another disadvantage of the known method is its low effectiveness since such method is based on a periodical operation mode because of having to use a settling tank which can be large-sized and may require a long settling time as a larger portion of moisture is separated by settling. Also, a certain portion of useful solids tends to form a deposit on a bottom of the settling tank, i.e. there is a loss of useful solids. According to the known method, the fermentation product is thickened in two stages and this makes the entire process more complex. In addition, a target product humidity is 10-15%, thus adversely affecting the product quality. Other method for conversion of poultry manure are known from DE 101 01 626 A1 for example.

The objective of the claimed invention is to provide a wasteless, environmentally safe and cost-effective production of a target product of better quality at a minimal power consumption.

The objective set for invention is achieved in the inventive method for conversion of poultry manure, comprising the steps of performing fermentation of an initial product, removing a biogas, adding a flocculating agent, dehydrating a processed substrate, drying and granulating a fertilizer thus produced, prior to fermentation the poultry manure is mixed with water to achieve an amount of solids in said mixture in the range of 8%-12%, then said mixture is heated up to 25 - 35°C and agitated to achieve a pH of the mixture in a range of 5.2-6.3, after biogas removal a foam suppressant is added to the fermented substrate along with addition of a solution comprising iron sulphate and sulphuric acid at a ratio of 50:50 and in an amount of 8 liters per 1 m³ of the substrate, then the flocculating agent is added to the resultant mixture in an amount of 1 liter per 1 m³ of the processed substrate, and a pH of the mixture is maintained in a range of 6.0 - 6.5, the processed substrate is dehydrated to achieve an amount of solids in the resultant digestate in a range of 40%-45%, dehydration water is subjected to dissolved air flotation, a flotation sludge is returned for chemical retreatment, and an effluent water resulting from flotation is filtered and purified in a reverse osmosis system with removal of residual salt ions, a resultant purified effluent water is mixed with poultry manure, and a post-treatment concentrate resulting from reverse osmosis purification is frozen, then ice is separated from a high-analysis fertilizer, melted to produce a meltwater which is purified in the reverse osmosis system with removal of residual salt ions and mixed with poultry manure.

Also, the objective for invention is achieved a fresh water is added to the water purified in the reverse osmosis system during mixing the poultry manure with water. The fermented substrate is fined to form particles having a size <10 mm. Anionic polyelectrolyte or polycarbamide is used as said flocculating agent. The isolated biogas is purified and supplied to a cogeneration plant to generate electrical power and thermal power. DAF technology and reverse osmosis technology are used for purification of the liquid fraction of the substrate. An ice maker is used for the preparation of the liquid high-analysis fertilizer.

The core of the claimed method is providing a wasteless technology of poultry manure conversion at a minimal power consumption in order to make a substantial improvement of ecological environment by means of a full and safe disposal of highly hazardous wastes of poultry factories and prevent leaks of polluting emissions and harmful effluents to the environment.

As a result of poultry manure conversion by means of the claimed method, it is feasible to produce a solid, granulated biofertilizer having the humidity of 4.58%, a liquid high-analysis biofertilizer, and thermal and electrical power meeting the needs of a bioenergetic complex for conversion of poultry factory wastes, minimizing thereby power coinsumption.

Dilution of poultry factory wastes with water isolated from excrements and purified using the reverse osmosis system enables to prevent leaks of harmful effluents to the environment, thus contributing to environmental friendliness of the claimed method.

Addition to the fermented substrate of a solution comprising iron sulphate and sulphuric acid and maintenance of a pH within a range of 6.0 - 6.5 allows to enhance the effectiveness of flocculation process. Addition of a flocculating agent makes flocks larger in size and thickens a mass to be processed prior to dehydration, thus enabling to increase the effectiveness of the entire process. In addition, flocculating agent particles remaining in the isolated liquid enables to increase the amount of organic particles removed from waste water in a flotation plant, allowing thereby to fully preserve useful substances and enhance the effectiveness of production.

The substrate dehydration to obtain 40%-45% of solids in the resultant digestate enables to reduce drying costs and achieve better quality of the fertilizer having the humidity of no greater than 4.58% .

Water removing concentrate freezing enables to increase concentration of a liquid fertilizer and the purified meltwater produced by ice melting can be mixed with poultry excrements as well, thus allowing to add more to environmental friendliness of the claimed method.

Fining the fermented substrate to form particles having a size <10 mm allows to increase a contact surface area for contacting the substrate with chemical reactants, thus increasing the biofertilizer output and, therefore, contributing more to the effectiveness of production.

Realization of the claimed method for conversion of poultry manure runs as follows.

The chicken manure from poultry factory is supplied to a preliminary acidification tank for mixing with water in order to provide 8-12% of solids in a mixture, said water comprising up to 80% of a recirculation product from reverse osmosis and fresh water from artesian well. The mixture contained in the preliminary acidification tank is heated to 25 - 35°C and agitated actively for 2 days. The acidification is completed when pH of the mixture is 5.2-6.3.

A substrate thus produced to be futher processed is supplied to a fermenter for mesophile anaerobic fermentation. In the fermenter, the substrate is heated to 38-40°C and agitated for homogenization, i.e. for mixing bacterial colonies with the substrate, and distribution of a fresh raw material being loaded. As a result of fermentation, anaerobic bacteria cleave complex chemical compounds (fats, proteins, carbohydrates) available in the product being fermented to form fatty acids and further produce compounds digestable for plants.

As a result of substrate fermentation which occurs in the fermenter, there is a production of biogas to be supplied to gas receivers for collection. Further, biogas is directed to a gas preparation unit for purification in order to reduce hydrogen sulphide amount and condense water vapors. The biogas thus purified is supplied to a cogeneration plant for generating electrical and thermal power to be used to energize the claimed technology. Electrical power consumption to produce the biofertilizer according to the suggested technology is 15% of the annual output of electrical power produced out of poultry manure conversion as per the claimed method, and thermal; power consumption to produce the biofertilizer is 50% of the annual output of thermal power produced out of poultry manure conversion as per the claimed method. The remaining electrical power and thermal power are offered for sale.

The fermented substrate contained in the fermener is discharged to a buffer tank for collecting, fining to form particles having a size <10 mm, supplying to a reactor for agitation during 30 minutes.

In order to avoid foaming, a foam suppressor in an amount recommended by a manufacturer is added to the fined substrate.

To reduce a pH of fermentation residuals to 6 - 6.5, a solution comprising iron sulphate and sulphuric acid at a ratio of 50:50 is added to the processed substrate in an amount of 8 liters per 1 m³ of the substrate. As a result of such addition, a formation of flocs starts.

For obtaining flakes of a greater size, a polymer is injected to the processed substrate. Such polymer is a solid anionic flocculating agent (anionic polyelectrolyte, polyacrylamide) in an amount of 1 liter per 1 m³ of the processed substrate. During formation of flocs, a pH of the mixture is maintained in a range of 6.0 - 6.5.

After chemical treatment, the resultant mixture is subjected to dehydration and thickening using, for example, an belt press. The process lasts till an amount of solids in a resultant cake (hereinafter referred to as "a digestate") is 40-45%.

The digestate thus produced is removed mechanically by scraper systems and is fed to a feed hopper of a drying line comprises of a belt conveyor that makes the digestate moving and a recirculating airflow enclosures that heat air to 80°C. As thermal energy providing for operation of recirculating airflow enclosures, the method uses thermal energy produced as a result of cooling a biogas-operated cogeneration plant, wherein said biogas is produced according to the suggested technology and collected in a gas-storage receiver. Prior to vent to atmosphere, the exhaust moist air is purified to remove dust and various impurities. The digestate dried to humidity of 4.58% is supplied to a granulating machine to produce a granulated solid fertilizer.

Components of the granulated solid fertilizer are listed in Table 1

**Table 1**

| Composition | Amount of component, % |
|---|---|
| Nitrogen in total | 4.0 |
| Phosphorus (P₂O ₅) | 8.0 |
| Potassium (K₂O) | 1.2 |
| Magnesium MgO | 2.62 |
| Sulphur SO₃ | 2.72 |
| Calcium CaO | 10.81 |
| Manganese (Mn) | 1133 mg/kg |
| Molybdenum (Mo) | 4.4 mg/kg |
| Copper (Cu) | 94 mg/kg |
| Zink (Zn) | 790 mg/kg |
| Organic substances | 62.48 |

The liquid produced by squeezing on a belt press (hereinafter referred to as "waste waters") is collected in a collecting tank and supplied to a flotation unit, e.g. DAF (dissolved airflotation) unit for dissolved air flotation. Suspended organic particles available in waste waters that contain a hydrophobic polymer (a solid anionic flocculating agent) attach to air bubbles ascending to a surface. A cake floating on a surface (flotation cake) is directed back to the reactor for chemical retreatment for greater extraction of the fermentation product to be used as a biofertilizer.

Post-flotation waste waters are passed twice through a paper filter designed to trap virtually invisible (small-sized) particles and supplied to a reverse osmosis system for further purification to remove dissolved salts. Using high-pressure pumps, waste waters are pumped through dozens of membrane filters of the reverse osmosis system.

Water purified in the reverse osmosis system comes to ion-exchanger for removal of residual ions of salts. As a result of the treatment in ion-exchanger, water is fully purified and fit for re-use (a recycled material) and it is directed to a preliminary acidification tank for mixing with chicken manure. The purified water has TBOD (total biochemical oxygen demand) <1 mg O₂/l.

A concentrate produced by the reverse osmosis system is collected in a buffer tank for further delivery to a refrigerating chamber. Inside the refrigerating chamber, water contained in the concentrate turns into ice which may be separated from the concentrate using a vacuum belt filter. Ice is melted and meltwater is supplied to the reverse osmosis system and purified.

Water purified in the reverse osmosis system is directed to ion-exchanger to remove residual ions of salts. As a result of water purification, the ion exchanger produces fully purified water which is fit for re-use (a recycled material), and it is directed to a preliminary acidification tank for mixing with chicken manure. The purified water has TBOD (total biochemical oxygen demand) <1 mg O₂/l.

A concentrate produced in the refrigerating chamber is a liquid high-analysis biofertilizer which is collected in a collecting tank and offered subsequently for sale.

Components of the liquid high-analysis biofertilizer made of chicken manure using the claimed method are shown in Table 2.

**Table 2**

| Composition | Amount of component, % |
|---|---|
| Nitrogen in total | 20 |
| Phosphorus (P₂O ₅) | 15 |
| Potassium (K₂O) | 15 |

Use of the claimed method enables to perform a full supply of the entire technology with in-process electrical power and thermal power sufficient for self-contained operation of a biogas complex, save pure water on the phase of dilution of the initial manure, enhance the environmental safety level of territories due to use of the produced recirculation material and as a result of clearance of the territories by removal of pollutants and hazardous effluents, provide a wasteless technology allowing to no longer use of waste substrate storage tanks. The suggested technology enables to effect a full disposal of both poultry excrements and any other agricultural waste materials and food industry wastes, and makes it possible to generate several waste conversion products (biogas, electrical power, thermal power, solid fertilizer, liquid high-analysis fertilizer and water).

## Claims

1. A method for conversion of poultry manure, comprising the steps of performing fermentation of an initial product, removing a biogas, adding a flocculating agent, dehydrating a processed substrate, drying and granulating a fertilizer thus produced, ***characterized in that*** prior to fermentation the poultry manure is mixed with water to achieve an amount of solids in said mixture in the range of 8%-12%, then said mixture is heated up to 25 - 35°C and agitated to achieve a pH of the mixture in a range of 5.2-6.3, after biogas removal a foam suppressant is added to the fermented substrate along with addition of a solution comprising iron sulphate and sulphuric acid at a ratio of 50:50 and in an amount of 8 liters per 1 m³ of the substrate, then the flocculating agent is added to the resultant mixture in an amount of 1 liter per 1 m³ of the processed substrate, and a pH of the mixture is maintained in a range of 6.0 - 6.5, the processed substrate is dehydrated to achieve an amount of solids in the resultant digestate in a range of 40%-45%, dehydration water is subjected to dissolved air flotation, a flotation sludge is returned for chemical retreatment, and an effluent water resulting from flotation is filtered and purified in a reverse osmosis system with removal of residual salt ions, a resultant purified effluent water is mixed with poultry manure, and a post-treatment concentrate resulting from reverse osmosis purification is frozen, then ice is separated from a high-analysis fertilizer, melted to produce a meltwater which is purified in the reverse osmosis system with removal of residual salt ions and mixed with poultry manure.

2. The method of claim 1, ***characterized in that*** a fresh water is added to the water purified in the reverse osmosis system during mixing the poultry manure with water.

3. The method of claim 1, ***characterized in that*** the fermented substrate is fined to form particles having a size <10 mm.

4. The method of claim 1, ***characterized in that*** anionic polyelectrolyte or polycarbamide is used as said flocculating agent.

5. The method of claim 1, ***characterized in that*** the isolated biogas is purified and supplied to a cogeneration plant to generate electrical power and thermal power.

6. The method of claim 1, ***characterized in that*** DAF technology and reverse osmosis technology are used for purification of the liquid fraction of the substrate.

7. The method of claim 1, ***characterized in that*** an ice maker is used for the preparation of the liquid high-analysis fertilizer.

## Patentansprüche

1. Verfahren zur Umwandlung von Geflügelmist, umfassend die Schritte des Durchführens von Fermentation eines Ausgangsprodukts, Entfernens eines Biogases, Zugebens eines Flockungsmittels, Dehydrierens eines verarbeiteten Substrats, Trocknens und Granulierens eines so erzeugten Düngemittels, ***dadurch gekennzeichnet, dass*** der Geflügelmist vor der Fermentation mit Wasser gemischt wird, um eine Feststoffmenge in dem Gemisch im Bereich von 8 % bis 12 % zu erreichen, dann das Gemisch auf bis zu 25 bis 35 °C erwärmt und gerührt wird, um einen pH des Gemischs in einem Bereich von 5,2 bis 6,3 zu erreichen, nach der Entfernung des Biogases dem fermentierten Substrat ein Schaumunterdrückungsmittel zusammen mit der Zugabe einer Eisensulfat und Schwefelsäure in einem Verhältnis von 50:50 umfassenden Lösung in einer Menge von 8 Litern pro 1 m³ zugegeben wird, danach das Flockungsmittel dem resultierenden Gemisch in einer Menge von 1 Liter pro 1 m³ des verarbeiteten Substrats zugegeben wird und ein pH des Gemischs in einem Bereich von 6,0 bis 6,5 gehalten wird, das verarbeitete Substrat dehydriert wird, um eine Feststoffmenge im resultierenden Gärrest in einem Bereich von 40 % bis 45 % zu erreichen, Dehydrationswasser Flotation mit gelöster Luft unterzogen wird, ein Flotationsschlamm zur wiederholten chemischen Behandlung zurückgeführt wird, und aus der Flotation resultierendes Ablaufwasser in einem Umkehrosmosesystem unter Entfernung von Restsalzionen gefiltert und gereinigt wird, ein resultierendes gereinigtes Ablaufwasser mit dem Geflügelmist gemischt wird und ein aus der Umkehrosmosereinigung resultierendes Nachbehandlungskonzentrat gefroren wird, dann Eis von einem hochanalytischen Düngemittel getrennt, zum Erzeugen eines Schmelzwassers, das im Umkehrosmosesystem unter Entfernung von Restsalzionen gereinigt wird, geschmolzen und mit dem Geflügelmist gemischt wird.

2. Verfahren Anspruch 1, ***dadurch gekennzeichnet, dass*** dem im Umkehrosmosesystem gereinigten Wasser während des Mischens des Geflügelmists mit Wassers frisches Wasser zugegeben wird.

3. Verfahren Anspruch 1, ***dadurch gekennzeichnet, dass*** das fermentierte Substrat verfeinert wird, um Teilchen mit einer Größe von < 10 mm zu erhalten.

4. Verfahren Anspruch 1, ***dadurch gekennzeichnet, dass*** anionischer Polyelektrolyt oder Polycarbamid als das Flockungsmittel verwendet wird.

5. Verfahren Anspruch 1, ***dadurch gekennzeichnet, dass*** das isolierte Biogas gereinigt und einer Kraft-Wärme-Kopplungsanlage zugeführt wird, um elektrische Leistung und thermische Leistung zu erzeugen.

6. Verfahren Anspruch 1, ***dadurch gekennzeichnet, dass*** die DAF-Technologie und die Umkehrosmosetechnologie zur Reinigung des flüssigen Anteils des Substrats verwendet werden.

7. Verfahren Anspruch 1, ***dadurch gekennzeichnet, dass*** eine Eismaschine zur Herstellung des flüssigen hochanalytischen Düngemittels verwendet wird.

## Revendications

1. Procédé de conversion de fumier de volaille, comprenant les étapes de réalisation d'une fermentation d'un produit initial, d'élimination d'un biogaz, d'ajout d'un agent floculant, de déshydratation d'un substrat traité, de séchage et de granulation d'un engrais ainsi produit, ***caractérisé en* ce qu'**avant la fermentation le fumier de volaille est mélangé avec de l'eau pour obtenir une quantité de matières solides dans ledit mélange dans la plage allant de 8% à 12%, puis ledit mélange est chauffé jusqu'à 25 à 35°C et agité pour atteindre un pH du mélange dans une plage allant de 5,2 à 6,3, après élimination du biogaz, un anti-mousse est ajouté au substrat fermenté avec l'ajout d'une solution comprenant du sulfate de fer et de l'acide sulfurique à un rapport de 50:50 et en une quantité de 8 litres par 1 m³ de substrat, puis l'agent floculant est ajouté au mélange résultant en une quantité de 1 litre par 1 m³ du substrat traité, et un pH du mélange est maintenu dans une plage allant de 6,0 à 6,5, le substrat traité est déshydraté pour obtenir une quantité de matières solides dans le digestat résultant, dans une plage allant de 40% à 45%, l'eau de déshydratation est soumise à une flottation à air dissous, une boue de flottation est renvoyée pour un retraitement chimique, et une eau effluente résultant de la flottation est filtrée et purifiée dans un système d'osmose inverse avec élimination d'ions de sel résiduels, une eau effluente purifiée résultante est mélangée avec le fumier de volaille, et un concentré de post-traitement résultant de la purification par osmose inverse est congelé, puis de la glace est séparée d'un engrais à haute analyse, fondue pour produire une eau de fonte qui est purifiée dans le système d'osmose inverse avec élimination d'ions de sel résiduels et mélangée avec le fumier de volaille.

2. Procédé de la revendication 1, ***caractérisé en ce* qu'**une eau fraîche est ajoutée à l'eau purifiée dans le système d'osmose inverse lors du mélange du fumier de volaille avec de l'eau.

3. Procédé de la revendication 1, ***caractérisé en ce que*** le substrat fermenté est affiné pour former des particules ayant une taille < 10 mm.

4. Procédé de la revendication 1, ***caractérisé en ce* qu'**un polycarbamide ou un polyélectrolyte anionique est utilisé comme étant ledit agent floculant.

5. Procédé de la revendication 1, ***caractérisé en ce que*** le biogaz isolé est purifié et fourni à une centrale de cogénération pour générer de l'énergie électrique et de l'énergie thermique.

6. Procédé de la revendication 1, ***caractérisé en ce que*** la technologie DAF et la technologie d'osmose inverse sont utilisées pour la purification de la fraction liquide du substrat.

7. Procédé de la revendication 1, ***caractérisé en ce* qu'**un générateur de glace est utilisé pour la préparation de l'engrais liquide à haute analyse.
